# EUROPÄISCHE PATENTSCHRIFT

(11) **EP 2 331 838 B1**
(45) Veröffentlichungstag und Bekanntmachung des Hinweises auf die Patenterteilung: **29.05.2013**
(21) Anmeldenummer: 09782580.6
(22) Anmeldetag: 03.09.2009
(51) Int. Cl.: F16D 43/22, F16D 43/21

(54) **ÜBERLAST-REIBUNGSKUPPLUNG**
OVERLOAD FRICTION CLUTCH
EMBRAYAGE À FRICTION AVEC PROTECTION CONTRE LES SURCHARGES

(30) Priorität: 09.09.2008 DE 102008041907
(43) Veröffentlichungstag der Anmeldung: 15.06.2011
(73) Patentinhaber: Thielert Aircraft Engines GmbH vertr. d. d. Insolvenzverwalter Dr. Bruno M. Kübler, 09350 Lichtenstein (DE)
(72) Erfinder: KLEINLEIN, Claus, 10785 Berlin (DE); SÜSS, Udo, 09337 Callenberg (DE)
(74) Vertreter: Specht, Volker
(86) Internationale Anmeldenummer: PCT/EP2009/061421
(87) Internationale Veröffentlichungsnummer: WO 2010/029013

(56) Entgegenhaltungen:
- US-A- 3 613 850
- US-A- 4 425 991
- US-A1- 2007 191 118
- US-A1- 2008 191 492

## Beschreibung

Die Erfindung betrifft eine Überlast-Reibungskupplung, die zwischen einer Antriebsmaschine und einer Arbeitsmaschine, insbesondere einem Flugzeugmotor und dem einem Propeller vorgeschalteten Getriebe angeordnet ist, die eine mit einer von der Antriebsmaschine angetriebenen Schwungscheibe fest verbundene Druckplatte und eine an der Schwungscheibe axial schwimmend gelagerte, durch Anpressfedern belastete Druckplatte sowie eine zwischen den beiden Druckplatten angeordnete, mit einer Getriebewelle verbundene Reibscheibe umfasst.

Überlast-Reibungskupplungen werden als Sicherheitskupplung zwischen einem Antriebsmotor und einem Getriebe bzw. einer Arbeitsmaschine angeordnet, um die Antriebsmaschine bei Überlast vor einer Beschädigung zu schützen. Bei einer bekannten Überlast-Reibungskupplung der eingangs erwähnten Art ist eine Mehrzahl von Tellerfederpaketen zum ständigen Anpressen der Druckplatten an die Reibscheibe vorgesehen. Diese Ausführungsform einer Überlast-Reibungskupplung ist insofern nachteilig, als zum einen bei längerer Betriebdauer und damit verbundenem Verschleiß der Reibscheibe die Federkraft und damit der Anpressdruck verringert wird und somit die Funktionsfähigkeit der Kupplung beeinträchtigt wird. Aufgrund von Schwingungen und Rüttelbewegungen der Kupplung können die Tellerfederpakete ihre Position ändern, so dass von den einzelnen Federpaketen unterschiedliche Kraftwirkungen auf die Reibscheibe ausgeübt werden und diese bei Überlast nicht gleichmäßig durchrutscht und sich verklemmen kann. Ein weiterer Nachteil der bekannten Reibungskupplungen besteht noch darin, dass von den Druckplatten in die Oberfläche der Reibscheibe feinste Metallpartikel eingebracht werden, so dass die Reibwirkung der Reibscheibe verringert und dadurch mit zunehmender Betriebsdauer die Funktion der Kupplung beeinträchtigt wird.

Eine gattungsgemäße Überlast-Reibungskupplung ist aus US-A-2008/191492 bekannt.

Der Erfindung liegt die Aufgabe zugrunde, eine Überlast-Reibungskupplung anzugeben, die auch nach längerer Betriebsdauer eine gleichbleibende und gleichmäßige Kraftwirkung zwischen der Reibscheibe und den Druckplatten gewährleistet und konstante Betriebsparameter sowie eine lange Lebensdauer aufweist.

Erfindungsgemäß wird die Aufgabe mit einer gemäß den Merkmalen des Patentanspruchs 1 ausgebildeten Überlast-Reibungskupplung gelöst. Weitere Merkmale und zweckmäßige Ausgestaltungen der Erfindung ergeben sich aus den Unteransprüchen.

Der Grundgedanke der Erfindung besteht bei einer Überlast-Reibungskupplung der eingangs erwähnten Art in der Ausübung der auf die axial schwimmend gelagerte Druckplatte wirkenden Anpresskraft mittels einer zentralen, mit ihrem Innen- oder Außenrand an der Schwungscheibe am zentrierend abgestützten Tellerfeder, deren freier Randbereich eine an die axial schwimmend gelagerte Druckplatte angeformte umlaufende Nase kontaktiert. Die als Tellerfeder ausgebildete Anpressfeder kann dadurch über ihre Planlage hinaus gespannt werden und in einem erweiterten Arbeitsbereich mit einer auch bei einem Verschleiß der Reibscheibe im Wesentlichen gleichbleibenden und überall gleichmäßig verteilten Federkraft auf die axial schwimmend gelagerte Druckplatte wirken. Bei einem Verschleiß der Reibscheibe erfolgt bei unverändert großer Federkraft eine selbsttätige Nachstellung der axial schwimmend gelagerten Druckplatte. Die auf die Druckplatten wirkende Kraft bleibt zudem trotz möglicher Rüttelbewegungen der Kupplung überall konstant, so dass die Druckplatten gleichmäßig an der Reibscheibe wirken und ein geometrisches Rupfen der Kupplung oder ein Verkanten oder gar Verklemmen vermindert oder ausgeschlossen ist. Bei gleichbleibenden Betriebsparametern kann die Lebensdauer der Kupplung somit deutlich erhöht werden.

Nach der Erfindung sind am Innenumfang der ringförmig ausgebildeten Tellerfeder in gleichmäßigem Abstand Gewichtssegmente zur Erhöhung der Federkraft, und zwar aufgrund der Verbiegung der Tellerfeder unter der Wirkung erhöhter Fliehkräfte während des Betriebes, angebracht.

Gemäß einem weiteren wichtigen Merkmal der Erfindung sind in die an der Reibscheibe anliegenden Reibflächen der beiden Druckplatten Schneidkanten bildende Vertiefungen (Schneidvertiefungen), beispielsweise in Form von mindestens einer Nut, eingeformt. Die von mindestens einer Kante der Vertiefung(en) gebildete mindestens eine Schneide ist so angeordnet, dass sie bei einer Relativbewegung zwischen den Druckplatten und der Reibscheibe die gesamte Reibfläche der Reibscheibe erfasst und dabei vollflächig eine dünne Oberflächenschicht, in die feinste metallische Partikel der beiden Druckplatten eingedrungen sein können, entfernt. Die Reibscheibe wird auf diese Weise konditioniert und behält ihre ursprünglichen Reibeigenschaften, so dass sich das Rutschverhalten der Kupplung nicht verändert und konstante Betriebsparameter erreicht werden können.

In Ausgestaltung der Erfindung weist die Schwungscheibe einen Boden mit umlaufender Bodennase zur Abstützung der Tellerfeder und einen umlaufenden Rand mit axial verlaufenden Ausnehmungen auf, in die am Außenumfang der schwimmenden Druckplatte angeformte Führungszähne eingreifen. An der Stirnseite des umlaufenden Randes ist die feste Druckplatte angebracht.

In vorteilhafter Weiterbildung der Erfindung sind am Außenumfang der schwimmenden Druckplatte außerdem Montagefinger und im umlaufenden Rand der Schwungscheibe von dessen Stirnseite ausgehende Montage-Gewindebohrungen vorgesehen. Mit Hilfe von in die Montage-Gewindebohrungen einschraubbaren Montage-Gewindebolzen kann die schwimmende Druckplatte entgegen der Federkraft der Tellerfeder auf einfache Weise montiert werden. Nach der Montage der festen Druckplatte können die Montage-Gewindebolzen über in der festen Druckplatte vorgesehene, mit den Montage-Gewindebohrungen fluchtende weitere Montagebohrungen wieder entfernt werden.

In weiterer Ausgestaltung der Erfindung ist die Schwungscheibe mit einem an deren Außenumfang umlaufenden Anlasserzahnkranz mit Geberrad verbunden. Am Boden der Schwungscheibe ist eine Anschlussplatte mit Schraubenbolzen zur Verbindung mit der Antriebsmaschine befestigt und in der Reibscheibe ist eine Nabe zu Verbindung mit dem Getriebe oder Propeller angebracht. In die der Reibfläche gegenüberliegende Außenfläche der festen Druckplatte sind Vertiefungen zur Gewichtsreduzierung eingeformt.

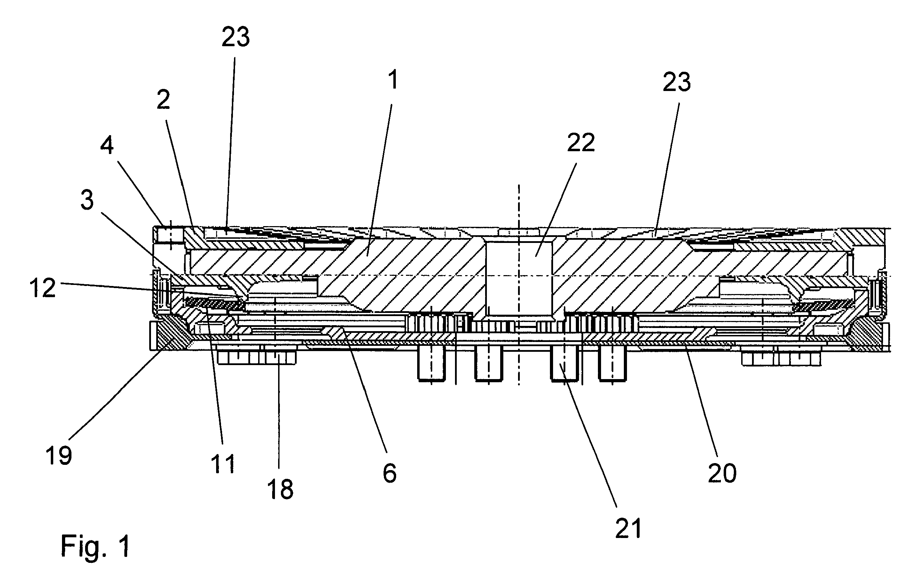

Ein Ausführungsbeispiel der Erfindung wird anhand der Zeichnung, in der
- Fig. 1: eine Schnittansicht einer Überlast-Reibungskupplung;

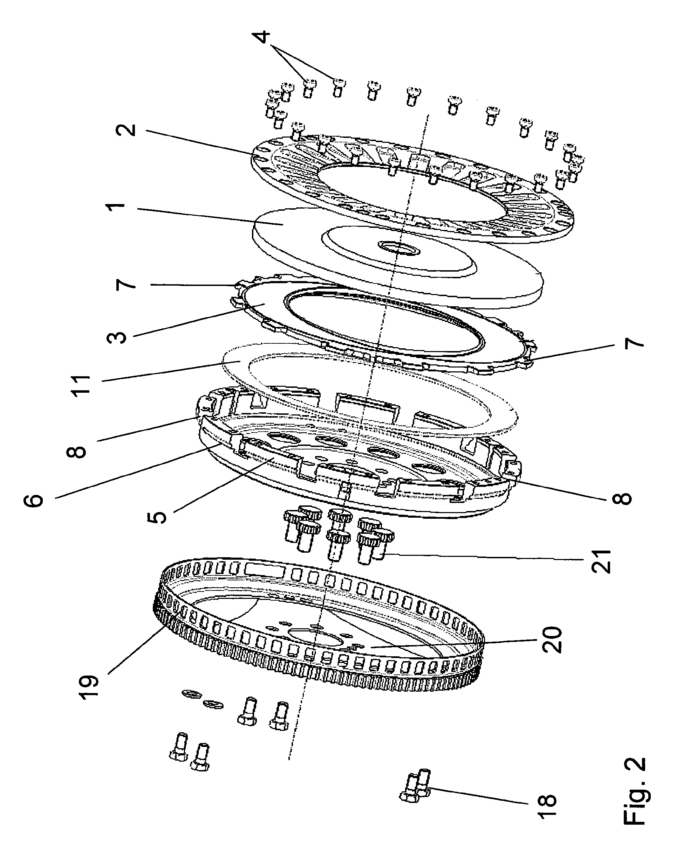

- Fig. 2: eine Explosionsdarstellung der Überlast-Reibungskupplung nach Fig. 1;
- Fig. 3: eine Unteransicht eines Teilstücks einer schwimmend gelagerten Druckplatte in perspektivischer Darstellung;
- Fig. 4: eine Draufsicht (auf die Reibfläche) der schwimmend gelagerten Druckplatte nach Fig. 1;
- Fig. 5: eine perspektivische Ansicht eines Teils der Überlast-Reibungskupplung im Schnitt; und
- Fig. 6: eine Draufsicht auf eine Ausführungsform einer als Tellerfeder ausgebildeten Anpressfeder
zeigt, näher erläutert.

Die Überlast-Reibungskupplung umfasst eine Reibscheibe 1, deren obere und untere Reibfläche von den Reibflächen einer fest angeordneten und einer schwimmend angeordneten, jeweils ringförmigen Druckplatte 2 und 3 kontaktiert wird. Die fest angeordnete Druckplatte 2 ist mittels Schraubenbolzen 4 an der Stirnseite des umlaufenden Randes 5 einer Schwungscheibe 6 befestigt, während die schwimmend angeordnete Druckplatte 3 mittels an deren Umfang angeformter Führungszähne 7 in Ausnehmungen 8 des umlaufenden Randes 5 der Schwungscheibe 6 axial beweglich gehalten ist. Am Boden 9 der Schwungscheibe 6 stützt sich auf einer an der Außenseite des Bodens umlaufenden Bodennase 10 im äußeren Randbereich eine als zentrale Anpressfeder zum Anpressen der Reibflächen der beiden Druckplatten 2, 3 an die Reibscheibe 1 dienende ringförmige Tellerfeder 11 ab. Die schwimmende Druckplatte 3 weist an der der Reibfläche gegenüberliegenden Seite eine umlaufende Nase 12 auf, die den äußeren Randbereich der angrenzenden Fläche der Tellerfeder 11 kontaktiert. Aufgrund der Anordnung der Tellerfeder 11 zwischen zwei an deren Innenrand und an deren Außenrand auf gegenüberliegenden Seiten wirkenden Nasen kann die Tellerfeder 11 über ihre Planlage hinaus gespannt werden, das heißt, zum Anpressen der axial schwimmend gelagerten Druckplatte 3 an die Reibscheibe 1 kann nunmehr ein erweiterter Bereich konstanter Kraftwirkung kurz vor und kurz hinter der Planlage der Tellerfeder 11 genutzt werden. Somit behält die Tellerfeder 11 auch bei einem Verschleiß der Reibscheibe 1, der einige Millimeter betragen kann, ihre Federkraft und bewirkt eine selbständige Verschleißnachstellung bei gleichbleibender und gleichmäßig verteilter Reibwirkung.

Eine gleichbleibende Reibwirkung zwischen den Druckplatten 2, 3 und der Reibscheibe 1 über einen langen Zeitraum wird zusätzlich dadurch aufrecht erhalten, dass in die Reibfläche der beiden Druckplatten 2, 3 Schneidvertiefungen 13, beispielsweise in Form einer Nut, eingeformt sind, die bei einer Relativbewegung zwischen den Druckplatten 2, 3 und der Reibscheibe 1 die Reibfläche der Reibscheibe 1 konditionieren, das heißt an dieser einen hauchdünnen Materialabtrag bewirken. Dadurch werden über die metallischen Druckplatten 2, 3 in die Oberflächen der Reibscheibe 1 eingebrachte Metallpartikel wieder entfernt und konstante Reibeigenschaften erzielt.

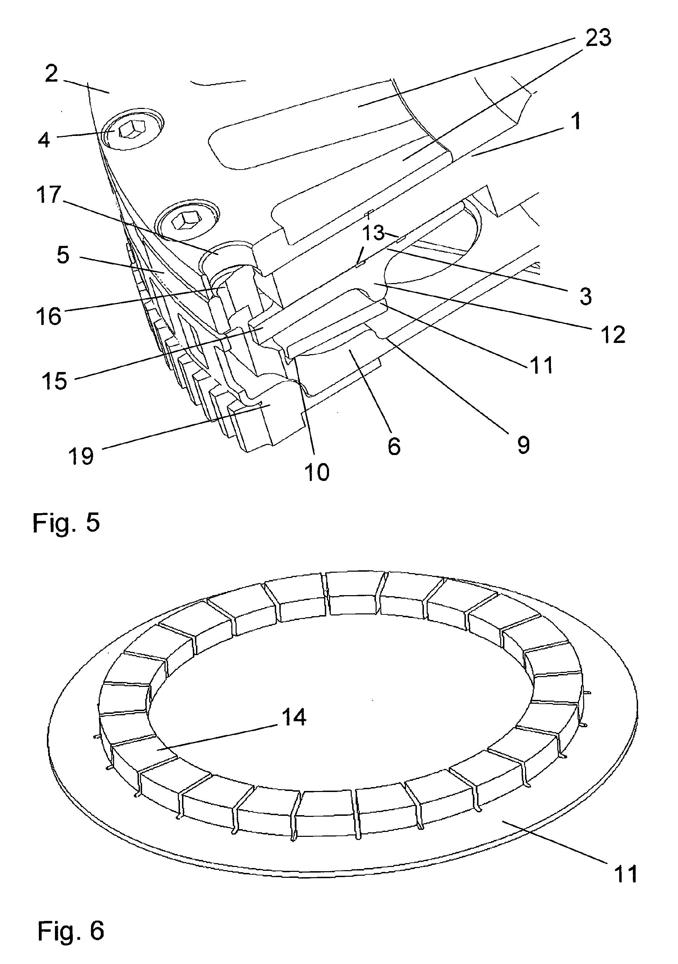

Fig. 6 zeigt eine Ausführungsform einer Tellerfeder 11, an deren Innenrand in gleichmäßigem Abstand Gewichtssegmente 14 außermittig, das heißt über die Oberfläche der Tellerfeder hinausragend, angeformt sind. Bei der Rotation der Überlast-Reibungskupplung wird durch die Gewichtssegmente 14 unter der Wirkung der Fliehkraft ein Moment in die Tellerfeder 11 eingebracht, die sich somit verbiegt und ihre Federkraft erhöht.

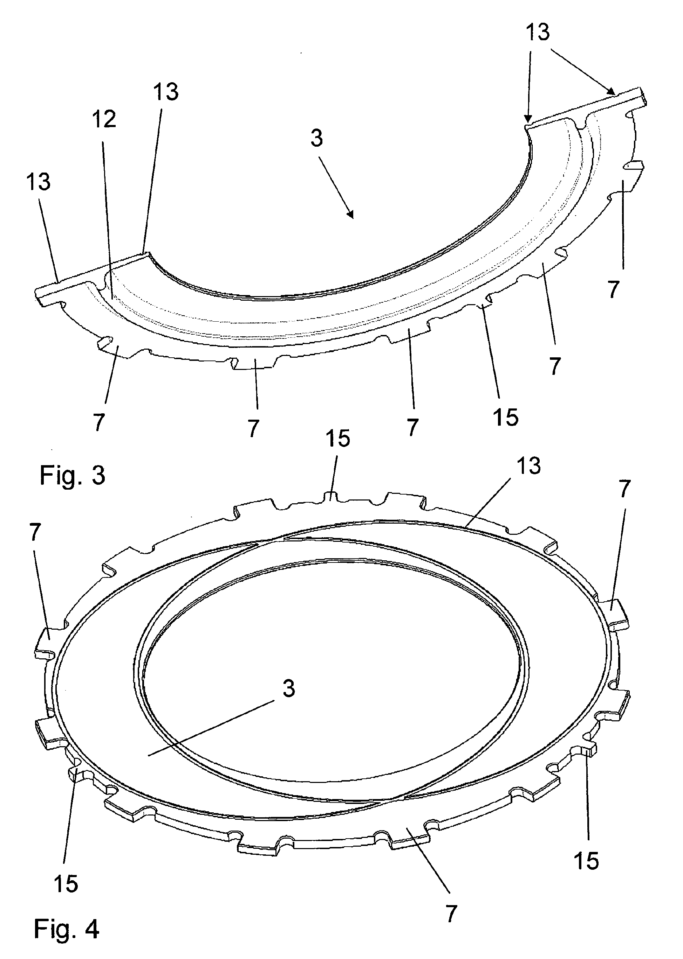

Wie Fig. 5 (vgl. auch Fig. 4) zeigt, sind an der schwimmenden Druckplatte 3 um 120° versetzt angeordnete Montagefinger 15 ausgebildet, die in entsprechende Ausnehmungen im umlaufenden Rand 5 der Schwungscheibe 6 eingreifen. Mit Hilfe von in Montage-Gewindebohrungen 16 der Schwungscheibe 6 schraubbaren Montage-Gewindestiften (nicht dargestellt) kann die schwimmend angeordnete Druckplatte 3 entgegen der Federkraft der Tellerfeder 11 in der Betriebsstellung positioniert und anschließend die Reibscheibe 1 und die feste Druckplatte 2 auf einfache Weise montiert werden. In der festen Druckplatte 2 befinden sich über der Montage-Gewindebohrung 16 positionierte Montagebohrungen 17, so dass die Montage-Gewindestifte nach dem Verschrauben der festen Druckplatte 2 an der Schwungscheibe 6 mittels der Schraubenbolzen 4 wieder entfernt werden können. Die Schwungscheibe 6 ist mittels Schraubenbolzen 18 mit einem Anlasserzahnkranz mit Geberrad 19 verbunden, der über eine Anschlussplatte 20 und weitere Schraubenbolzen 21 an die Kurbelwelle einer Antriebsmaschine, hier eines Flugzeugmotors (jeweils nicht dargestellt), angeschlossen wird. In der Reibscheibe 1 ist mittig eine - hier verzahnte - Nabe 22 befestigt, über die die Verbindung mit einer Getriebeeingangswelle (nicht dargestellt) und letztlich mit dem Propeller eines Flugzeugs erfolgt. In die feste Druckplatte 2 sind zur Verringerung des Gewichts der Kupplung Vertiefungen 23 (Fenster) eingeformt.

### Bezugszeichenliste

| | |
|---|---|
| 1 | Reibscheibe |
| 2 | feste Druckplatte |
| 3 | schwimmende Druckplatte |
| 4 | Schraubenbolzen |
| 5 | umlaufender Rand v. 6 |
| 6 | Schwungscheibe |
| 7 | Führungszähne v. 3 |
| 8 | Ausnehmungen v. 5 |
| 9 | Boden v. 6 |
| 10 | umlaufende Bodennase v. 6 |
| 11 | Tellerfeder |
| 12 | umlaufende Nase v. 3 |
| 13 | Schneidvertiefungen, Schneidnut v. 2, 3 |
| 14 | Gewichtssegmente v. 11 |
| 15 | Montagefinger v. 3 |
| 16 | Montage-Gewindebohrung in 6 |
| 17 | Montagebohrung in 2 |
| 18 | Schraubenbolzen |
| 19 | Anlasserzahnkranz mit Geberrad |
| 20 | Anschlussplatte |
| 21 | Schraubenbolzen |
| 22 | verzahnte Nabe |
| 23 | Vertiefung (Fenster) in 2 |

## Patentansprüche

1. Überlast-Reibungskupplung, die zwischen einer Antriebsmaschine und einer Arbeitsmaschine, insbesondere einem Flugzeugmotor und dem einem Propeller vorgeschalteten Getriebe angeordnet sein kann, die eine mit einer von der Antriebsmaschine angetriebenen Schwungscheibe (6) fest verbundene Druckplatte (2) und eine an der Schwungscheibe (6) auf Anpressfedern (11) axial schwimmend gelagerte Druckplatte (3) sowie eine zwischen den beiden Druckplatten (2, 3) angeordnete, mit einer Getriebewelle verbundene Reibscheibe (1) umfasst, wobei als Anpressfeder eine zentrale, an ihrem Innen- oder Außenrand am Schwungrad (6) abgestützte Tellerfeder (11) vorgesehen ist, **dadurch gekennzeichnet, dass** die Tellerfeder (II) an ihrer gegenüberliegenden Fläche am nicht abgestützten Rand mit einer an der axial schwimmend gelagerten Druckplatte (3) ausgebildeten umlaufenden Nase (12) in Wirkverbindung steht und über ihre Planlage hinaus spannbar ist und in einem erweiterten Arbeitsbereich mit im Wesentlichen konstanter, gleichmäßig verteilter Federkraft auf die axial schwimmend gelagerter Druckplatte (3) wirkt, wobei am Innenumfang der ringförmig ausgebildeten Tellerfeder (11) in gleichmäßigem Abstand Gewichtssegmente (14) zur Erhöhung der Federkraft aufgrund der Verbiegung der Tellerfeder unter der Wirkung der Fliehkräfte während des Betriebes angebracht sind.

2. Überlast-Reibungskupplung nach Anspruch 1, **dadurch gekennzeichnet, dass** die Schwungscheibe (6) einen Boden (9) mit umlaufender Bodennase (10) zur Abstützung der Tellerfeder (11) und einen umlaufenden Rand (5) mit axial verlaufenden Ausnehmungen (8), in die am Außenumfang der schwimmenden Druckplatte (3) angeformte Führungszähne (7) eingreifen, umfasst, wobei an der Stirnseite des umlaufenden Randes (5) die feste Druckplatte (2) angebracht ist.

3. Überlast-Reibungskupplung nach Anspruch 2, **dadurch gekennzeichnet, dass** am Außenumfang der schwimmenden Druckplatte (3) Montagefinger und im umlaufenden Rand (5) der Schwungscheibe (6) von dessen Stirnseite ausgehende Montage-Gewindebohrungen (16) vorgesehen sind, um mit Hilfe von in die Montage-Gewindebohrungen (16) einschraubbaren Montage-Gewindebolzen die schwimmende Druckplatte (3) entgegen der Federkraft der Tellerfeder (11) montieren zu können, wobei zu der nach der Montage der festen Druckplatte (2) vorgesehenen Entfernung der Montage-Gewindebolzen in der festen Druckplatte (2) mit den Montage-Gewindebohrungen (16) fluchtende Montagebohrungen (17) ausgebildet sind.

4. Überlast-Reibungskupplung nach Anspruch 1, **dadurch gekennzeichnet, dass** die Schwungscheibe (6) mit einem an deren Außenumfang umlaufenden Anlasserzahnkranz mit Geberrad (19) verbunden ist.

5. Überlast-Reibungskupplung nach Anspruch 1, **dadurch gekennzeichnet, dass** am Boden (9) der Schwungscheibe (6) eine Anschlussplatte (20) mit Schraubenbolzen (21) zur Verbindung mit der Antriebsmaschine und in der Reibscheibe (1) eine Nabe (22) zu Verbindung mit dem Getriebe oder Propeller angebracht ist.

6. Überlast-Reibungskupplung nach Anspruch 1, **dadurch gekennzeichnet, dass** in die der Reibfläche gegenüberliegende Außenfläche der festen Druckplatte (2) Vertiefungen (23) zur Gewichtsreduzierung eingeformt sind.

7. Überlast-Reibungskupplung nach Anspruch 1, **dadurch gekennzeichnet, dass** in die Reibflächen der beiden Druckplatten (2, 3) Schneidvertiefungen (13) eingeformt sind, die bei einer Relativbewegung zwischen den Reibpaaren die gesamte Reibfläche der Reibscheibe (1) erfassen und zu deren Konditionierung eine minimale Oberflächenschicht abtragen.

## Claims

1. An overload friction clutch, which is arranged between a drive machine and a working machine, in particular an aircraft engine and the transmission upstream from a propeller, which comprises a pressure plate (2) rigidly connected to a flywheel (6) driven by the drive machine and an axially floating pressure plate (3) mounted on the flywheel (6) on contact springs (11), as well as a friction disk (1) arranged between the two pressure plates (2, 3) and connected to a gear shaft, **characterized in that** the provided contact spring is a central disk spring (11) supported on its inner or outer edge on the flywheel (6), whose opposing surface on the unsupported edge is actively connected with a continuous nose (12) molded onto the axially floating pressure plate (3), and which can be stressed beyond its flatness, and acts on the axially floating pressure plate (3) with an essentially constant and evenly distributed spring force in an expanded working range, wherein the inner periphery of the annular disk spring (11) is provided with uniformly spaced weight segments (14) to increase the spring force by bending the disk spring during exposure to elevated centrifugal forces while in operation.

2. The overload friction clutch of claim 1, **characterized in that** the flywheel (6) has a floor (9) with continuous floor nose (10) for supporting the disk spring (11), and a continuous edge (5) with axially running recesses (8), into which engage guiding teeth (7) molded onto the outer periphery of the floating pressure plate (3), wherein the fixed pressure plate (2) is secured to the face of the continuous edge (5).

3. The overload friction clutch of claim 2, **characterized in that** mounting fingers are provided on the outer periphery of the floating pressure plate (3), and threaded mounting boreholes (16) are provided in the continuous edge (5) of the flywheel (6), proceeding from its face, so that threaded mounting bolts that can be screwed into the threaded mounting boreholes (16) can be used to install the floating pressure plate (3) against the spring force of the disk springs (11), wherein mounting boreholes (17) that align flush with the threaded mounting boreholes (16) are formed in the fixed pressure plate (2) in order to remove the threaded mounting bolts after the fixed pressure plate (2) has been installed.

4. The overload friction clutch of claim 1, **characterized in that** the flywheel (6) is connected to a starter gear ring with rotary sensor (19) circling its outer periphery.

5. The overload friction clutch of claim 1, **characterized in that** a terminal plate (20) with threaded bolts (21) for connection to the drive machine is secured to the floor (9) of the flywheel (6), and a hub (22) is attached in the friction disk (1) for joining with the gearing or propeller.

6. The overload friction clutch of claim 1, **characterized in that** depressions (23) for reducing weight are molded into the outer surface of the fixed pressure plate (2) lying opposite the frictional surface.

7. The overload friction clutch of claim 1, **characterized in that** the frictional surfaces of the two pressure plates (2, 3) have molded into them cutout depressions (13), which cover the entire frictional surface of the friction disk (1) during a relative motion between the friction pairs, and remove a minimal surface layer for their conditioning.

## Revendications

1. Un embrayage à friction contre des surcharges arrangé entre une machine motrice et une machine conduite, particulièrement un moteur d'avion et un engrenage disposé en amont d'un hélice, comprenant une plaque de pressage (2) connectée fixement à un volant (6) actionné par la machine motrice et une plaque de pressage (3) flottant axialement sur des ressorts à pression (11) au volant (6) et un disque de friction (1) arrangé entre les deux plaques de pressage (2, 3) et connecté à un arbre de transmission, **caractérisé en ce qu'**un central ressort de plateau (11) appuyé à son bord intérieur ou extérieur au volant (6), lequel est à sa surface opposée au bord non-appuyé en liaison coopérant avec un nez (12) périphérique formé à la plaque de pressage (3) flottante axialement et est serrable au-delà de sa planéité et opère à la plaque de pressage (3) flottante axialement dans un domaine d'activité élargi avec une tension de ressort essentiellement constante et distribuée de manière uniforme, est prévu comme ressort à pression, des segments de masse (14) pour augmenter la résilience en raison de la torsion du ressort de plateau sous l'influence des forces centrifuges pendant le fonctionnement étant attachés à distance égale au périmètre intérieur du ressort de plateau (11) formé de manière annulaire.

2. L'embrayage à friction contre les surcharges selon la revendication 1, **caractérisé en ce que** le volant (6) comprend un sol (9) ayant un nez de sol périphérique (10) pour appuyer le ressort de plateau (11) et un bord périphérique (5) ayant des exclusions (8) passant axialement, dans lesquelles des dents guidage (7) formées à la périphérie extérieure de la plaque de pressage (3) flottante s'interposent, la plaque de pression (2) fixe étant attachée au front du bord périphérique (5).

3. L'embrayage à friction contre les surcharges selon la revendication 2, **caractérisé en ce que** des doigts de montage sont prévus à la périphérie extérieure de la plaque de pressage (3) flottante et dans le bord périphérique (5) du volant (6) des trous taraudés de montage (16) prenant comme point de départ son front sont prévus pour pouvoir monter la plaque de pressage (3) flottante contre la résilience du ressort de plateau (11) à l'aide des goujons filetés de montage vissables dans les trous taraudés de montage (16), des trous de montage (17) étant formés de manière alignés avec les trous taraudés de montage (16) dans la plaque de pressage (2) au démontage des goujons filetés prévu après le montage de la plaque de pressage (2) fixe.

4. L'embrayage à friction contre les surcharges selon la revendication 1, **caractérisé en ce que** le volant (6) est connecté à une couronne dentée de démarreur ayant une roue émettrice (19) et étant périphérique à sa périphérie extérieure.

5. L'embrayage à friction contre les surcharges selon la revendication 1, **caractérisé en ce qu'**une plaque de raccordement (20) ayant des boulons (21) pour la liaison avec la machine motrice est attachée au sol (9) du volant (6) et un moyeu (22) pour la liaison avec l'engrenage ou l'hélice est attaché dans le disc de friction (1).

6. L'embrayage à friction contre les surcharges selon la revendication 1, **caractérisé en ce que** des excavations (23) pour la réduction du poids sont formées dans la surface extérieure de la plaque de pressage (2) fixe laquelle est opposée à la surface de friction.

7. L'embrayage à friction contre les surcharges selon la revendication 1, **caractérisé en ce que** des excavations coupage (13) accrochant lors d'un mouvement relatif entre les pairs de friction la surface de friction entière du disque de friction (1) et déblayant une couche de surface minimale pour les conditionner sont formées dans les surfaces de friction des deux plaques de pressage (2, 3).
